# EUROPEAN PATENT APPLICATION

(11) **EP 2 887 001 A1**
(43) Date of publication of application: **24.06.2015**
(21) Application number: 13197981.7
(22) Date of filing: 18.12.2013
(51) Int. Cl.: F28F 9/013, F28D 7/16, B01J 8/04, F22B 37/20, F28F 9/22

(54) **Tube heat exchange unit for internals of heat exchangers or reactors**

(71) Applicant: CASALE SA, 6900 Lugano (CH)
(72) Inventor: Rizzi, Enrico, 22070 Casnate con Bernate (CO) (IT)
(74) Representative: Zardi, Marco

(57) **Abstract**

Tube-bundle heat exchange unit (1) for internals of heat exchangers or reactors, comprising: at least one tube bundle (2); a plurality of baffles (3) associated with said tube bundle and defining through-openings according to a predefined arrangement, each opening being passed through by one of more tubes of the tube bundle, and a shell (6) which surrounds said tube bundle and said baffles, said shell (6) being structurally fixed to said baffles (3); also described are a method for assembling said heat exchange unit, a heat exchanger or chemical reactor containing said units, and a method for modernizing intercooled, catalytic, multi-bed reactors, in which an inter-bed exchanger is replaced by said units.

## Description

### Field of application

The invention relates to tube heat exchange units for internals of heat exchangers or reactors, in particular reactors for the chemical or petrochemical industry. A preferred application of the invention consists in gas-to-gas exchangers for internals of catalytic reactors, such as intercooled multi-bed reactors. The invention also applies in general to tubular apparatus, such as heat exchangers or reactors, comprising an outer shell suitable for withstanding a predefined operating pressure and a second inner shell which surrounds a tube bundle.

### Prior art

The need to install tube-bundle heat exchange units inside chemical reactors, heat exchangers or other apparatus is known. Notable examples are, for example, multi-bed reactors containing one or more intermediate gas-to-gas heat exchangers between the beds, such as the reactor described in EP 0 376 000. Apparatus such as heat exchangers which comprise a main outer shell and a tube bundle inside, provided with its own shell surrounding the tubes, are also known.

In these apparatus it is therefore possible to define:
a first outer shell, also referred to as a "high-pressure shell"; said first shell in fact is sized and designed to withstand the operating pressure, which is typically several tens of bars or in some cases more than 100 bar;
a second inner shell, which may be defined as a "low-pressure shell": it is in fact subject to a pressure difference between inside and outside which is typically small, being for example a few bars due to pressure losses.

So far, the prior art construction of said low-pressure shell has always been inspired by the same principles which govern the design of the high-pressure shell. These principles comprise in particular: a cylindrical shell with a circular cross-section; a sealed shell; an extractable tube bundle and a shell structurally independent of the tube bundle.

The choice of a cylindrical shell is due essentially to the constructional simplicity and ease of extracting the tube bundle However it gives rise to a drawback, which hitherto has never been overcome, namely that of the large bypass areas, i.e. areas on the periphery of the bundle which are not occupied by the tubes. Even if the low-pressure shell is produced with small tolerances for its circular and cylindrical form (which however increase the cost), there exists a space between the tube bundle and the shell which cannot be eliminated.

Said space is greater when the diameter of the tubes is relatively large compared to the diameter of the low-pressure shell, and this is frequently the case, for example, in the field of internal exchangers of pressurized apparatus, where the low-pressure shell has a fairly small diameter. In practical terms, the bypass area may be more than 20% to 30% of the available flow cross-section. In some embodiments, the tubes are distributed in a circular ring, between an internal tube and an outer shell and consequently there exist bypass areas both on the inner periphery and on the outer periphery.

The features of a shell which is structurally independent of the tube bundle and, consequently, of extractable tube bundle, are also considered essential in the prior art for allowing the maintenance or replacement of the tube bundle itself.

Another common feature in the prior art is the presence of baffles which support the tubes, preventing vibrations, and increase the turbulence on the shell side, thereby improving the heat exchange coefficient. Said baffles define a suitable configuration of through-openings for the tubes, for example they define elongated slots for respective rows of horizontal, vertical or diagonal tubes. Generally it is envisaged alternating baffles to support the tubes in different supporting planes, which are for example perpendicular to each other. In this way, the baffles cooperate so as to prevent vibrations in any direction.

A known way of making said baffles is the so called rod baffle configuration, which is described, among other documents, in US 5,058,664 and US 5,642,778. According to this technique, sets of parallel and suitably oriented bars form the tube support baffles. Slotted baffles for receiving the tubes (slotted baffles) are described for example in WO 2008-045243.

Said rod baffle construction technique is widely used, especially if the tubes exceed a certain length, but give rise to a number of drawbacks. It always requires a framework of longitudinal rods for supporting the baffles which increases the costs and the weight of the structure and results in the loss of useful volume for the tubes. Moreover, the tubes pass through the openings of the baffles with a highly precise fit, otherwise the baffles would be unable to prevent vibrations. However, this precise fit complicates assembly of the baffles. The difficulties of inserting the tubes through the baffles are well-known to operators in the sector: the relevant standard norms stipulate a very small amount of play (practically zero play) between tubes and baffles and often the tubes must be forced inside the tube bundle, resulting in a long assembly time and the risk of damage.

With reference to the intercooling internal exchangers of multi-bed adiabatic catalytic reactors, which constitute a preferred application of the present invention, the following observations may be made.

It is known that the space inside the reactor is of great importance because it essentially determines the volume of catalyst, i.e. the useful volume which contributes to the conversion. This is true in particular in the case of revamping operations aimed at increasing the production, where attempts are made to recover useful volume inside a pre-existing reactor. The volume of the exchangers situated between successive beds is not available to the catalyst and consequently there is a great incentive to reduce the dimensions of the exchangers. Another important factor is the exchange efficiency which in turn influences the dimensions. Moreover, the gas output on the shell side is sometimes situated opposite to a desired side, for example for introduction into a following catalytic bed. This problem results in the need to transfer the gas via special tubes, for example situated in the centre of the exchanger, with a series of drawbacks including greater complication, greater dimensions and pressure losses.

The prior art does not offer a satisfactory solution to the aforementioned problems and requirements. So far, the construction of low-pressure shells has always applied the principles indicated above, while accepting the disadvantages and drawbacks.

### Summary of the invention

The invention aims to solve the aforementioned problems and provide an exchanger for internals of high-pressure apparatus which allows, compared to the prior art: greater efficiency; more compact design for the same performance (exchange area, pressure losses); greater flexibility of configurations with respect to the location of the inlet and outlet for the gas on the shell side; easy execution and disassembly for maintenance operations; lower costs.

The idea underlying the invention is to provide a tubular heat exchange unit with a shell which is structurally integral with the baffles of the tube bundle.

The objects are achieved by a heat exchange unit according to the attached claim 1, which comprises at least one tube bundle, a plurality of baffles associated with said tube bundle, and a shell structurally integral with said baffles.

The term of heat exchange unit for internals of heat exchangers or reactors denotes that the referred heat exchange unit is not designed to withstand the operating pressure, in particular the pressure existing in the shell side that is the pressure in the space outside the tubes and delimited by the shell of the apparatus. More precisely, the unit is intended to operate inside a reactor or exchanger, in an environment which is under a pressure substantially the same as said operating pressure. Therefore, the shell of the heat exchange unit is subject substantially to the same pressure both on the inside and on the outside and is not designed to withstand the entire operating pressure. Consequently it may be lightweight and have a small thickness. The reactor or exchanger in which the heat exchange unit is mounted is provided with its own shell, suitable for withstanding the operating pressure.

The invention is based on the realization that the shell of an apparatus for internals is not subject to a major pressure difference. Therefore, the idea is that of adopting a design approach which is different and innovative compared to the prior art. The prior art teaches designing the apparatus for internals substantially based on the same criteria applied to pressurized reactors and exchangers; the invention on the other hand uses a simple and light structure, with a small-thickness shell, internally supported by the baffles. Said baffles provide an encircling action for the shell and do not require the conventional support framework because they are supported and guided axially by the said shell.

The invention makes the baffles to cooperate structurally with the shell. The baffles themselves act as ribs which increase the strength of the shell although said shell is particularly lightweight and thin. Moreover, the shell acts as a structural element which keeps the baffles in position, avoiding the need for the prior art frameworks.

The approach of the invention, using a shell which is structurally integral with the baffles of the tube bundle, dispenses with a number of apparent advantages of the prior art, such as the tube bundle extractable from the shell. The above is however overcompensated by a gain in efficiency, a simple and lightweight design, along with a number of other advantages which will be described in greater detail below.

The tube bundle unit according to the invention therefore has a single body comprising essentially the tubes, baffles and shell. Said single body may be inserted into a reactor or exchanger or vice versa extracted therefrom. The baffles may be designed for example based on the idea of rod baffles already mentioned above and widely described in literature.

Various aspects and applications of the invention are described in the accompanying dependent claims.

The shell may be advantageously directly fixed to a frame of the baffles; in other embodiments, elements which define the openings for the tubes, for example the rods in a rod baffle design, are fixed directly to the shell. In all cases the connection to the shell may be fixed (for example welded) or releasable.

In some embodiments the shell of said heat exchange unit has a non-circular cross-section. Fixing of the shell to the baffles of the tube bundle in fact facilitates the construction of non-cylindrical shells. For example the shell may have: a cross-section with the form of a regular polygon; a cross-section with the form of an irregular polygon; a cross-section comprising one or more straight sides and one or more curvilinear sides, preferably circle arcs. According to preferred embodiments, a shell has a polygonal cross-section with 6, 8 or 12 sides, which is regular or irregular. Other variants of the invention comprise: a shell with a stepped cross-section; a shell with a polygonal cross-section closely matching a circular cross-section. Said stepped cross-section is formed, for example, by sides arranged adjacent at 90 degrees and in succession which approximate a circle.

An advantage of these embodiments is that the non-circular cross-section remains close to the edges of the baffles and close to the peripheral tubes of the bundle. Compared to a circular cross-section shell, the bypass areas are therefore smaller with an advantage in terms of efficiency. A polygonal cross-section has the further advantage that the tubes may be arranged along lines which can be more easily circumscribed by the shell.

Preferably said shell comprises at least one longitudinal joint for connection to said baffles. The longitudinal direction is understood here as being a direction parallel to the tubes of the bundle or to the axis of the tube bundle itself. In the case of a cylindrical shell, the longitudinal direction is parallel to the direction of the generatrices of the said shell. Said at least one joint is therefore directed along a generatrix of the shell.

Preferably said at least one longitudinal joint is releasable. Releasable joints may be formed, for example, by pins and keys, or by means of a bolt connection or by means of joints with slots and wedges or superimposed portions, known per se.

Releasable joints, however, are not essential for the purposes of the invention. Longitudinal joints of the shell and also optional circumferential joints may also be welded or riveted or formed with a combination of said two techniques. In all these case in fact the structural unity between shell and baffles is ensured.

In accordance with another aspect of the invention, said shell may comprise a plurality of circumferential portions and/or a plurality of longitudinal sections. The circumferential portions, where provided, surround the tube bundle at an angle having its vertex on a longitudinal axis of the bundle, for example four circumferential portions, each extending angularly through 90 degrees. The longitudinal sections preferably have a length substantially equal to the distance between two consecutive baffles of the tube bundle. Said distance is also called the pitch of the baffles. These embodiments may be defined as "segmental shell". A shell formed as a single removable part may be regarded as being a single segment.

In some embodiments of the invention, each of said baffles consists of elements which define said through-openings for the tubes, and said elements are fastened directly to the shell. The baffles thus do not have a peripheral edge or frame, since the shell itself forms the edge. For example, adopting the known rod baffle construction principle, the rods of the baffles are fixed, for example welded, directly to the shell.

Generally, an embodiment comprising baffles without a frame has a shell provided with seats for receiving the ends of the elements which form the openings in the baffles (such as the rods of a rod baffle structure). Said seats have a size greater than the characteristic transverse dimension of the ends of said elements. In this way, the assembly is facilitated. The seats are able to freely receive the aforementioned elements which may be conveniently fixed by means of welding or a releasable connection. Said seats may be for example circular holes or slots of a suitable shape, for example a rectangular shape.

Another measure for facilitating assembly in an embodiment comprising baffles without a frame is the following: the shell is formed by longitudinal sections and the seats for receiving the ends of the baffle elements may be:
- composed of two half-cavities formed in the edge of adjacent sections of the shell, or
- formed entirely in the edge of one of the sections.

In the second case, for example, the sections have a top edge having suitably shaped incisions formed therein, for receiving the baffle elements, and a smooth bottom edge. When the shell sections are stacked on top of each other, the seats for fixing the baffle elements are defined along the edge between two sections.

Preferably the shell comprises retaining means for the baffles, acting at least in the axial direction.

Preferably, the connection between said baffles and said shell is substantially fluid-tight. The term "substantially fluid-tight" is understood as meaning that the connection between baffles and shell can be sealed, or allow a bypass which however is negligible compared to the total throughput.

In some embodiments, at least one of the baffles of the tube bundle is blind, i.e. forms a sealed barrier which prevents the gas passage in the shell side. A blind baffle is sealed with respect to the outside of the tubes which form the bundle.

The presence of one or more sealed blind baffles, which may be in combination with one or more longitudinal baffles and/or in combination with a shell formed by longitudinal sections, allows the formation of two or more fluid passages in the shell side, with a great degree of freedom and flexibility. For example the shell side fluid inlet and outlet points may be determined by the designer with a greater degree of freedom than in the prior art.

The invention also relates to an apparatus, in particular a reactor for the chemical or petrochemical industry, or a heat exchanger, comprising an outer shell able to withstand a predefined operating pressure and comprising a heat exchange unit according to the accompanying claims.

A preferred application consists in intercooled multi-bed catalytic reactors. In this case, the heat exchangers between a catalytic bed and the following bed, or at the outlet of a catalytic bed, are advantageously realized according to the invention.

Intercooled multi-bed reactors are known in the prior art. Typically said reactors comprise annular catalytic beds and one or more tubular heat exchangers; each of said exchangers is inserted coaxially in the centre of a bed; the effluent gas from a bed passes through the shell side of the exchanger before entering the next bed. Inside the tubes a cooling fluid which may be for example water, steam or fresh gas (reagents) circulates and is thus preheated.

The invention also applies to the modernization of existing reactors. A reactor of the intercooled multi-bed type, for example, may be modernized by replacing one or more existing inter-bed heat exchangers with heat exchangers according to the invention, comprising a tube bundle, a plurality of tube bundle baffles and a shell structurally integral with the baffles.

This application is particularly interesting since there exists a wide range of intercooled adiabatic bed reactors, in particular in the field of ammonia and methanol production, and there is a pressing need to modernize these reactors by increasing their capacity.

Another aspect of the invention consists in a method for assembling a tube heat exchange unit for internals of heat exchangers or reactors. According to said method a tube bundle having a plurality of baffles which comprise through-openings, each passed through by a tube or by several tubes of the tubes bundle, for example using the rod baffle technique, is provided. The baffles, according to the method of the invention, are movable at least in the axial direction relative to said tube bundle; after inserting all the tubes, the baffles are locked in the final position for example by means of a template; then the shell is assembled and is fixed structurally to the baffles, so that the baffles are retained in their respective operating position relative to the tube bundle.

The advantages of the invention are numerous and may be summarized as follows: greater efficiency; more compact design for the same performance (exchange area, pressure losses); greater flexibility of configurations; easy execution and disassembly for maintenance operations; lower cost.

An important feature of the invention is that the baffles act as ribs of the shell. In many cases, for example in multi-bed catalytic reactors, the pressure outside the low-pressure shell is greater than the internal pressure. This means that despite the small pressure difference, the shell is subject to a compressive stress which is known to be a severe stress because it can lead to instability. To avoid this risk, the prior art has a tendency to design the shell with a large thickness. The baffles of the tube bundle, according to the invention, form supports for the shell and help withstand said compressive stress; then the shell can be made thin and lightweight.

Another of the advantages of the invention, as already mentioned, is the reduction or the near elimination of the bypass effect. This is made possible by the seal between shell and baffles and by the fact that the shell itself can be provided with a form (e.g. polygonal or stepped) to match more closely the arrangement of the tubes.

The elimination or reduction of the bypass effect results in a general increase in the efficiency. Moreover, in some cases, the invention simplifies the construction, reducing the number of baffles required, for the same performance. For example in the above cited WO 2008-045243 it is taught that some baffles of the tube bundle have the sole function of reducing the bypass effect by deviating the flow from the walls of the shell towards the centre of the tube bundle. In this case, the total number of the baffles is determined by heat exchange requirements and not by vibration problems of the tubes. The total elimination of the bypass effect, thanks to the invention, may allow the number of baffles to be reduced. A smaller number of baffles reduces the costs and the pressure losses on the shell side, since each baffle must be crossed by the gas flowing in the shell side.

Another significant advantage is compactness. In catalytic reactors this advantage is particularly appreciated because it allows recovery of useful catalyst volume.

In a reactor with annular beds and intermediate exchangers in the centre of the beds, the replacement of a conventional exchanger with an exchanger according to the present invention allows a reduction in the diameter of the inner collector of the first and second beds, recovering the outer surface, which in the case of a circular shell generates the bypass effect, as outflow cross-section of the gas. Owing to the greater exchange efficiency it is also possible to reduce the number of tubes and obtain an even more compact exchanger. In some embodiments a single tube bundle may replace two or more conventional exchangers, in particular owing to the segmented shell. In this way a more advantageous design is obtained, for example with a reduction in the number of tube plates.

In partially open reactors (also called "bottle reactors"), the reduction in the diameter of said inner collector may result in further constructional simplification. For example, the inside of these reactors is accessible only via an opening (manhole) with a relatively small diameter, and the inner collector is formed by several parts which must be introduced one by one inside the manhole and then welded inside the reactor. This operation is long and complex due to the need to perform welding inside the reactor. A smaller inner collector, which is made possible by the invention, may be introduced through the manhole as one piece, with significant simplification and a reduction in costs.

The feature of disassembling the shell, which is made possible by one or more longitudinal joints, facilitates access to the tube bundle for cleaning or inspections.

Another important advantage consists in the possibility of providing both transverse and longitudinal partitions on the shell side. The feature of a structural unit and seal between shell and baffles allows transverse partitioning of the exchanger in an easy and low-cost manner, using for example blind baffles, while the shell joints allow longitudinal partitions with almost perfect sealing, as required in the case of U-shaped tubes, avoiding the more costly sealing means which are instead indispensable in the prior art. A heat exchange unit according to the invention may comprise a plurality of longitudinal partitions, forming a plurality of passages in the shell side.

The assembly method is simplified significantly. It should be noted in particular that, before assembling the shell, the baffles are not constrained axially with respect to the tubes and have a certain freedom of movement, despite the precise tolerances between tubes and openings in the baffles. This facilitates significantly the insertion of tubes. For example the tubes of a straight bundle must be centred only on the two tube plates. The baffles are then put in position one by one, for example by means of a template, and locked in the desired configuration upon assembly of the shell. This reduces significantly the assembly time and difficulties and therefore the cost.

The invention may be applied, among other things, to the design of shell and tube heat exchangers. One aspect of the invention relates to a heat exchanger comprising: a first outer shell withstanding a predefined operating pressure; at least one tube bundle; a plurality of baffles associated with said tube bundle, a second shell which surrounds said tube bundle and said baffles, said second shell being situated inside said first shell, and said second shell being structurally integral with said baffles of the tube bundle.

The advantages will emerge even more clearly with the aid of the following detailed description relating to a number of preferred embodiments.

### Description of the figures

Fig. 1 is a diagram of a tube heat exchange unit according to a first embodiment of the invention.
Fig. 2 is a perspective view of a portion of a tube bundle with a shell fixed to baffles of the tube bundle, according to one of various embodiments of the invention;
Figs. 3 and 4 are details of Fig. 2.
Fig. 5 is a perspective view of a portion of tube bundle with a cylindrical shell, provided with a longitudinal joint and shown open during construction.
Fig. 6 is a detail of a preferred embodiment for providing a longitudinal joint of the cylindrical shell shown in Fig. 5.
Fig. 7 shows the shell according to Fig. 5 closed by the respective longitudinal joint.
Fig. 8 shows a detail of a preferred way of supporting the baffles by the shell.
Fig. 9 shows an embodiment with a cylindrical shell formed by longitudinal sections.
Fig. 10 shows the detail "A" of Fig. 9.
Fig. 11 shows an example of embodiment comprising baffles without a frame and rods fixed directly to the shell.
Fig. 12 illustrates an example of a step for assembly of a tube heat exchange unit according to an embodiment of the invention.
Fig. 13 shows an embodiment with U-shaped tubes.
Figs. 14, 15, 16 and 17 are diagrams similar to that of Fig. 1, showing a number of other embodiments of the invention.
Fig. 18 shows a multi-bed catalytic reactor of the conventional type.

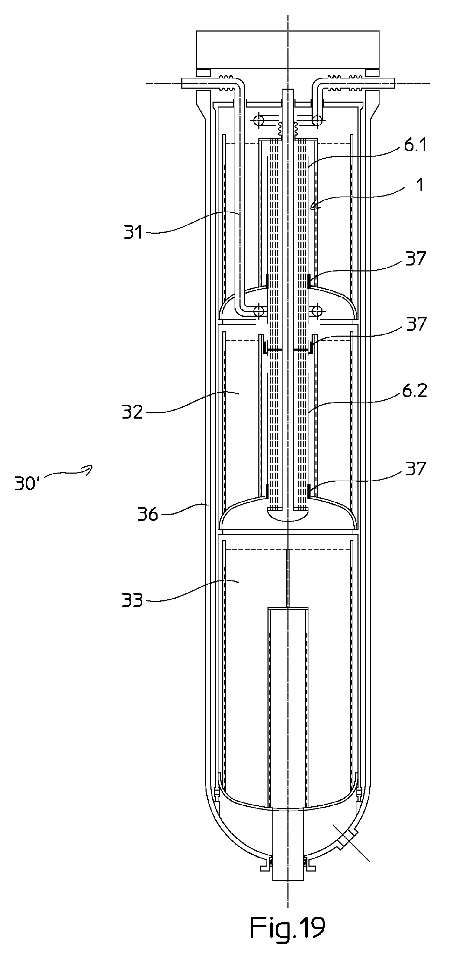

Fig. 19 shows a multi-bed catalytic reactor comprising a heat exchange unit according to the invention.

### Detailed description

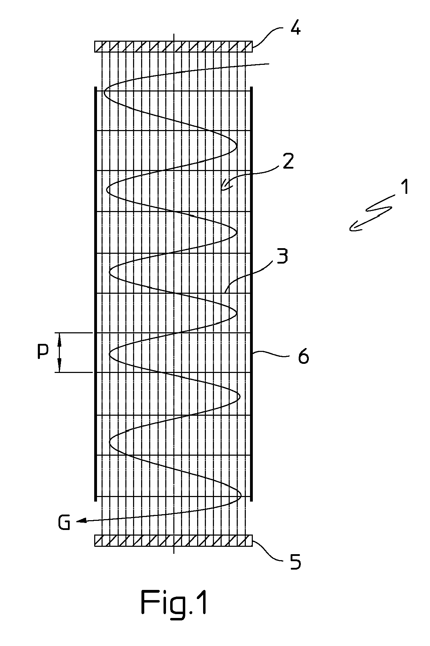

Fig. 1 shows a heat exchange unit 1 for internals of reactors, comprising a tube bundle 2 (only the tube axes are indicated for the sake of simplicity) and a series of baffles 3. The example shows straight tubes between two tube plates 4 and 5, but in other embodiments the tube bundle 2 may be for example U-shaped.

The baffles 3 prevent vibration of tubes, promote heat exchange and define passing-through openings, each passed through by one or more tubes, for example a row of tubes. Adjacent baffles may support tubes in different directions, in accordance with the rod baffle construction technique or other known techniques.

The exchanger 1 comprises a shell 6 which surrounds the tube bundle 2 and which, according to the invention, is structurally integral with the baffles 3. The arrow G of Fig. 1 denotes a fluid passing through the shell side of the exchanger 2, entering near the plate 4 and exiting near the plate 5.

The baffles 3 are spaced from each other by a pitch p, which is preferably constant.

The flow G exchanges heat with another flow passing inside the tubes of the bundle 2. In some applications, the exchanger 1 is a gas-to-gas exchanger; the gas G contains reagents and reaction products and is the effluent of a catalytic bed; the flow inside the tubes for example consists of reagents which are preheated. In other applications the fluid inside the tubes may consist of water, steam, etc.

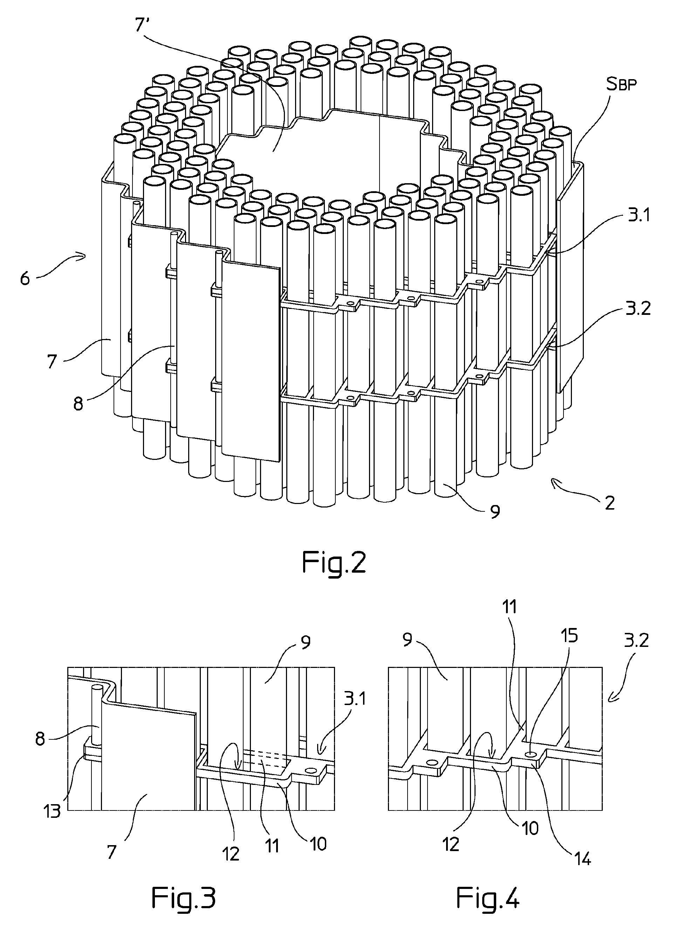

With reference now to the constructional aspects, Fig. 2 shows one of the possible embodiments in which the shell 6 is formed by a wall 7 with a stepped polygonal shape. Said wall 7 is removably fixed to the baffles 3 by means of pins 8. The reference number 9 denotes the tubes which form the bundle 2. The apparatus comprises a plurality of baffles 3 which are spaced by a pitch p in a similar manner to that shown in Fig. 1. The baffles are collectively denoted by the reference number 3. Fig. 2 shows two baffles 3.1 and 3.2 with a different arrangement of the openings for the tubes, in particular oriented at 90 degrees.

The form of the baffles 3 and the structural connection to the wall 7 (forming the shell 6) are more clearly visible in Figs. 3 and 4.

A baffle 3 comprises essentially a peripheral frame 10 and straight and parallel elements in the form of bars 11 which define openings 12 for the tubes 9. Each opening 12 receives a certain number of tubes. The openings 12 in adjacent baffles may be differently oriented in a plane perpendicular to the axis of the tubes, for example they are oriented at 90 degrees, so as to support the tubes in complementary support planes, as can be understood by comparing the details shown in Figures 3 and 4.

It should be noted that the rods 11 represent one of the constructional forms of the baffles 3 and that there are equivalent embodiments with baffles of a different type such as grid baffles which are known per se and therefore not described in detail here.

In the example shown the frame 10 has a stepped polygonal form, substantially like that of the wall 7; in other embodiments the frame 10 has different forms, for example it is a regular or irregular polygon or a circumference.

The wall 7 of the shell 6 may be formed by different longitudinal sections and/or by different portions which together surround the tube bundle 2.

The pins 8 engage eyelets 13 of the wall 7 and holes 15 of corresponding lugs 14 of the frames 10 of the baffles 3, ensuring positioning and axial support of the said baffles 3. One of the holes 15 is visible in Fig. 4.

It can be understood that, by means of the releasable connection with the pins 8, the shell 6 is structurally cooperating with the baffles 3. The shell directly supports the baffles 3 and no specific framework or structure is necessary, as is instead required in the prior art. Moreover the same baffles 3 act as transverse ribs for the shell 6, cooperating to the strength of the shell which can be made particularly light and thin.

Owing to the stepped polygonal form, the potential bypass space of the tubes, denoted by the symbol SBP in Fig. 2, is very small. This is because the stepped wall 7 remains very close to the peripheral tubes 9 of the bundle 2 and matches their arrangement much better than a circular cross-section.

A sealing gasket may be provided between the baffles 3 and the wall 7, although it is not essential and normally not present.

Fig. 2 shows an embodiment in which the tube bundle 2 has an annular configuration and the heat exchange unit also comprises an inner wall 7' with the function of an inner tube, for example for conveying the flow upwards after a passage through the shell side. Preferably said inner wall 7' has the same configuration as the outer wall 7, for example the stepped configuration shown in Fig. 2 or a polygonal or circular configuration.

Advantageously the shell 6 comprises one or more joints arranged longitudinally, i.e. parallel to the direction of the tubes 9.

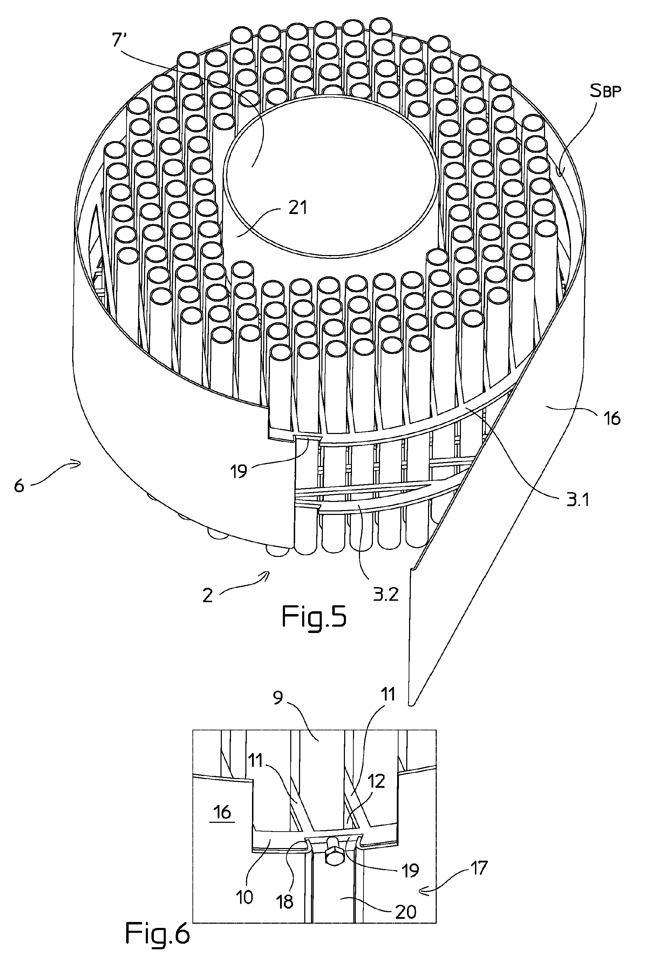

Fig. 5 shows an example of a circular shell 6, formed by a metal sheet 16 wrapped around the tube bundle 2, and with a single longitudinal joint 17. Also the Fig. 5 shows two baffles 3, denoted by the symbols 3.1 and 3.2.

Details of said longitudinal joint 17, according to a preferred embodiment, are shown in Fig. 6. The frame 10 of each baffle 3 has a seat 19, for example in the form of a dovetail, for receiving the ends 18 of the sheet 16. The ends 18 of said sheet 16 are advantageously configured to engage the seats 19, for example they are folded in a hook shape. The sheet 16 is wrapped around the tube bundle 2 as shown for example in Fig. 6 and locked by means of a shaped profile 20.

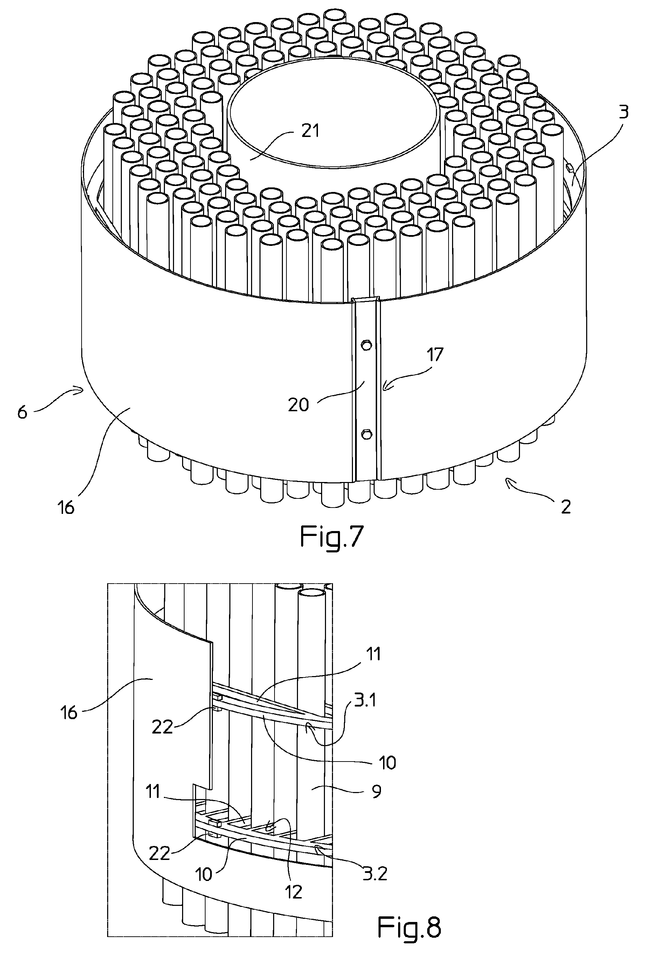

Fig. 7 shows the assembled shell with the longitudinal joint 17. It can be noted that in this example an annular tube bundle 2 with central tube 21 is also shown.

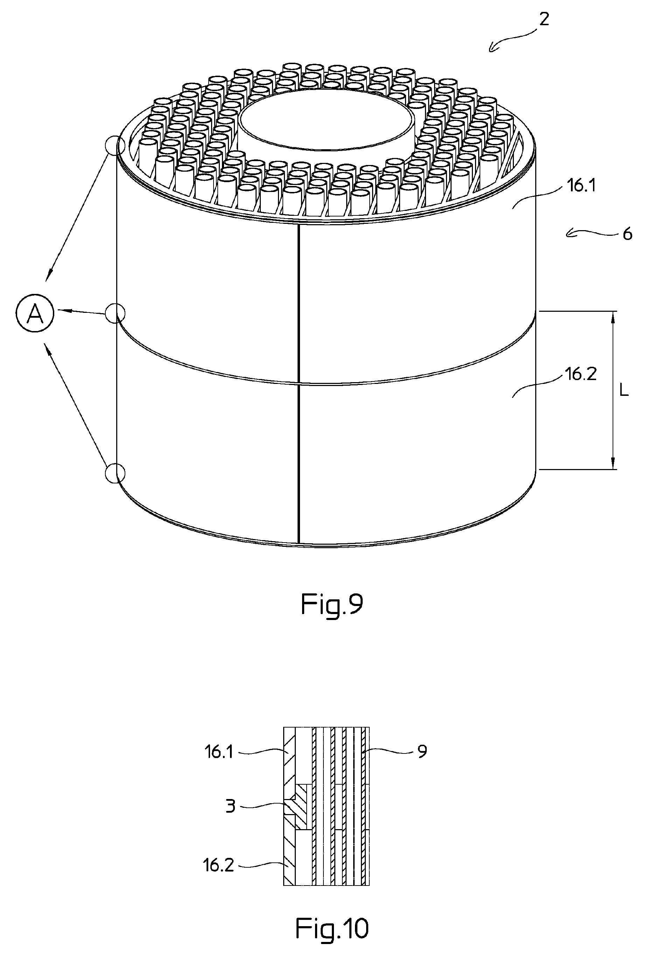

The joint 17 is described solely by way of example; other types of joint are possible, for example joints with eyelets and wedges or joints of the conventional type with overlapping portions. In order to simplify wrapping of the shell 6 around the tube bundle 2, the shell 6 may be advantageously formed by a plurality of sections as in the embodiment of Fig. 9.

The detail in Fig. 8 shows an example of supporting means associated with the shell and suitable for supporting the baffles 3 in the desired positions. In the embodiment shown, by way of example, said support means are formed with pairs of cleats 22 which are fixed to the inner wall of the shell 6 (i.e. the sheet 16). The structural cooperation of the shell 6 which itself supports the baffles 3 is therefore readily understood.

It should also be noted that, owing to the construction with the shell 6 fixed to the baffles 3, said baffles 3 expand longitudinally in relation to the tubes 9 following the shell 6. As a consequence, the heating and in particular the temperature transients (e.g. during start-up of a chemical reactor inside which the unit 1 is inserted) do not induce tensions between the shell and baffles.

The longitudinal joints such as the joint 17 described above and any circumferential joints may also be non-releasable, for example they may be welded and/or riveted. Non-releasable joints may be preferred when the shell removal feature is not necessary or is not required. The structural unity between the shell 6 and the baffles 3 is in any case ensured.

Fig. 9 shows an embodiment in which the shell 6 comprises longitudinal sections. The example shows a construction similar to that of Fig. 7, i.e. with a cylindrical shell, where two sections 16.1 and 16.2 are visible. Preferably the length L of a section is equivalent to the pitch p of the baffles 3, shown in Fig. 1.

The example in Fig. 9 also shows a welded structure, as can be understood from the detail shown in Fig. 10. The baffles 16.1, 16.2, etc., which form the shell 6 are welded to the baffles 3. In Fig. 3 it is possible to see the edge of the baffle 3 shaped to receive the ends of the sheets 16.1, 16.2. This variant is applicable when the removability feature is not required.

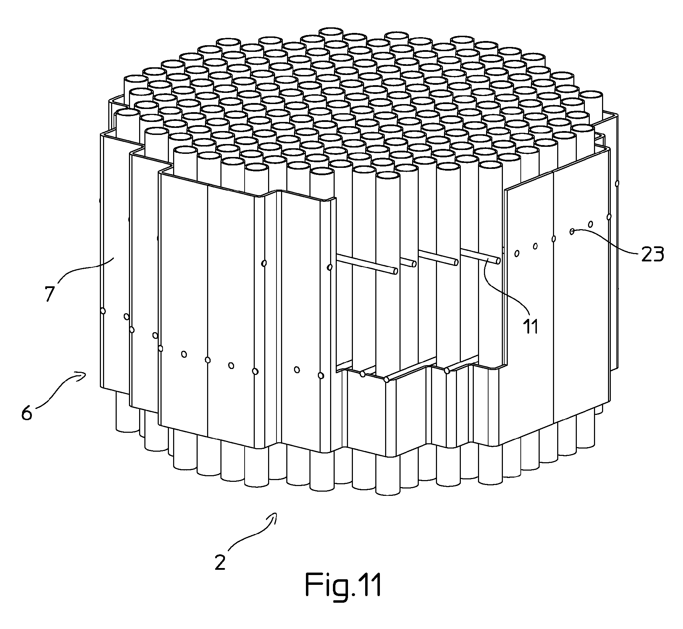

Fig. 11 shows a variant which reduces to the minimum the space between the shell and the baffles, since it eliminates the peripheral frame of the baffles, when the removability feature is not required. In said variant, the elements 11 which define the openings 12 for the tubes are directly fixed to the shell 6, i.e. the baffles 3 do not have the frame 10.

The figure shows an example in which substantially circular rods 11 are welded inside holes 23 in the wall 7. In variants with the sleeve formed by several sections, said holes 23 are advantageously formed by half-cavities formed in the edges of the sections. It should be noted that other forms of the rods 11 and the respective seats in the shell (equivalent to the holes 23) are possible.

It should also be noted that Fig. 11 shows a shell 6 formed by a stepped wall 7, as in Fig. 2, but it must be considered that said variant comprising frameless baffles is applicable also to all the other embodiments, such as those comprising a circular shell as shown in Figs. 5-9.

A central duct, if present (as for example shown in Fig. 7 or Fig. 9), shall be provided with suitable blind seats for said elements.

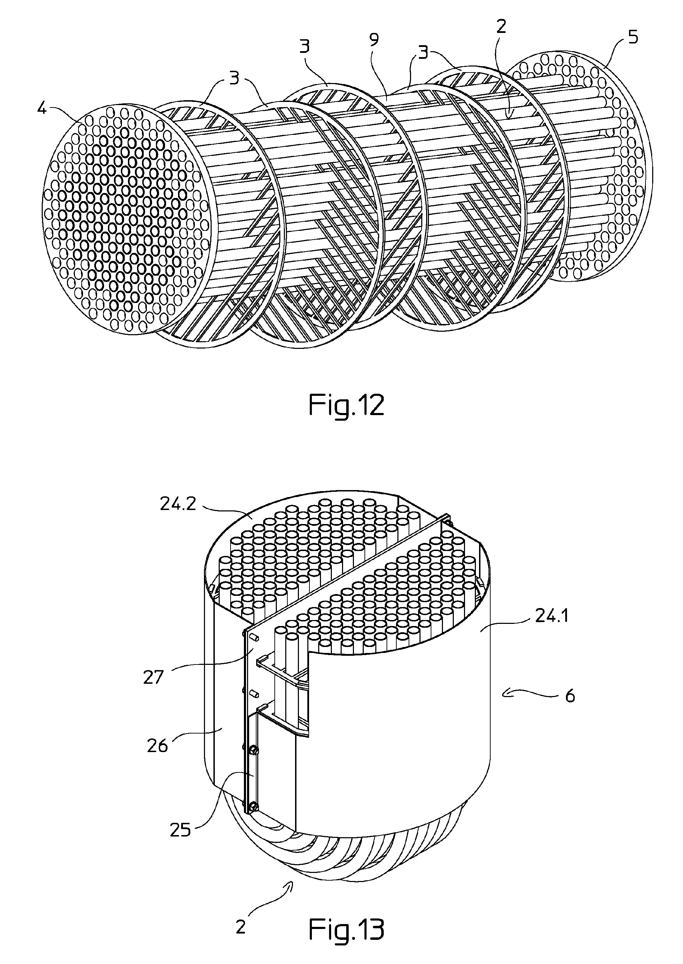

Fig. 12 illustrates an example of the manufacturing method which also forms an aspect of the invention. The figure shows the main components, i.e. the bundle 2 of tubes 9, the plates 4 and 5, and the baffles 5. The baffles 3 are movable both axially (i.e. in a direction parallel to the tubes 9) and transversely, in the direction of the openings 12. The figure shows the baffles 3 staggered as a result of this transverse mobility. The transverse mobility is possible in certain cases, for example with baffles which define slotted openings, as long as the peripheral tubes are not mounted; once all the tubes are mounted or in the case of other types of baffle, for example grid baffles, said transverse mobility may be prevented.

It can be easily understood from Fig. 12 that introduction of tubes 9 into the openings 12 of the baffles 3 during assembly is greatly facilitated. In the prior art, in fact, the tubes are inserted when the baffles 3 are already locked in their definitive position, which means that a tube must engage exactly with the series of openings 12 which have minimum play. This gives rise to major assembly problems. With the invention, on the other hand, the mobility of the baffles 3 makes insertion of the tubes easier and quicker. The baffles 3 are then positioned as desired, spaced at a pitch p, and locked by means of a template or other auxiliary means; the shell 6 is then mounted for example using the procedure illustrated in Figs. 5-9. The shell 6, once mounted, keeps the baffles 3 in position for example by means of the cleats 22 described above. This example illustrates even more clearly the structural cooperation between the shell and the baffles.

Fig. 13 shows another constructional variant suitable in particular for a U-shaped tube bundle 2. In this variant the shell 6 (which may be divided into longitudinal sections) is formed by half-shells 24.1 and 24.2 joined together by longitudinal flanges 25. Said half-shells are advantageously shaped with an arc-shaped portion and a flat portion 26 terminating in the flanges 25 and support a longitudinal partition 27 which is clamped between said flanges 25.

It is known that U-tube exchangers normally require a longitudinal partition in order to obtain a shell side passage in counter-flow relative to the tubes; Fig. 13 shows that a longitudinal partition 27 may be supported directly by the shell 6, which in turn is fixed to the baffles 3.

Partitioning of the shell side in U-tube exchangers in other words is particularly simple and advantageous because it ensures absolute sealing of the central partition 27, increasing efficiency and reducing costs. As can be seen from the figure, the shape of the two half-shells 24.1 and 24.2 terminating with flat portions 26 is such that the longitudinal flanges 25 remain within the external dimensions of a conventional cylindrical shell. Several longitudinal divisions of the shell side are possible; for example a shell with three longitudinal passages is obtained with two partitions (which may be constructionally similar to the partition 27 shown in the figure).

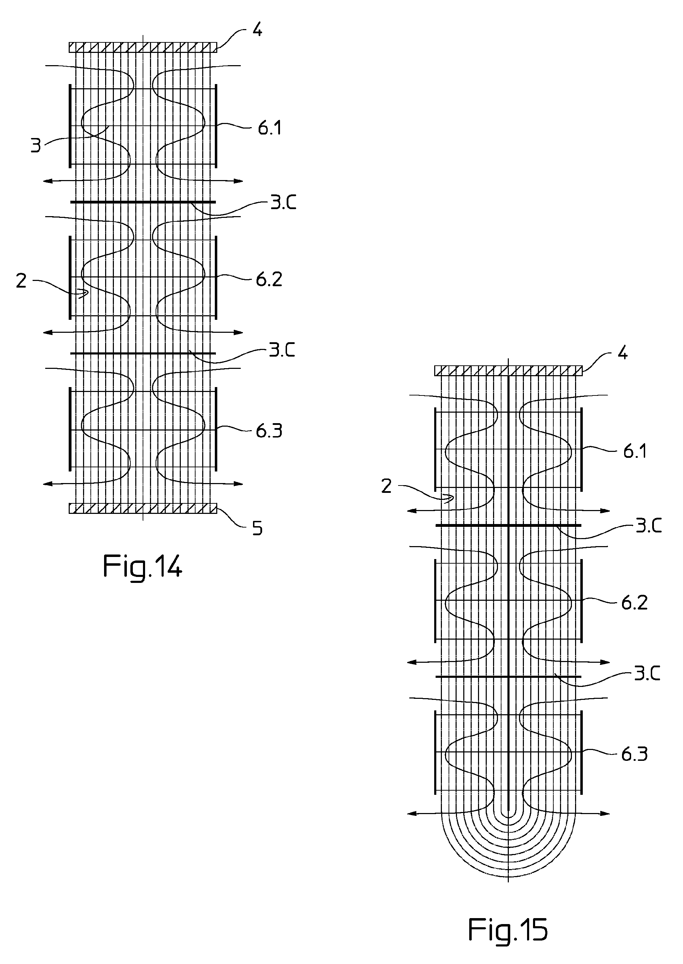

Figs. 14-17 show some of the numerous configurations which are possible thanks to the invention.

Fig. 14 shows an exchanger with straight tubes, in which the shell 6 is formed substantially by three longitudinal sections 6.1, 6.2 and 6.3. The ends of the sections are spaced so as to leave openings for gas inlet and outlet. Furthermore the exchanger comprises blind baffles 3.c between a longitudinal section and the following section. Said baffles 3.c, unlike the baffles 3 (indicated by a thin line) do not allow the gas passage in the shell side. Three shell side passages are then obtained, as shown by the arrows in the figure.

Fig. 15 shows a diagram with U-shaped tubes instead of straight tubes and, therefore, with a single tube plate 4. A longitudinal partition is also present and the shell side is divided into six sections.

The fluid which flows in the shell side may undergo a given process step between one passage and another. Said process step may include for example a heat exchange and/or a chemical reaction stage. The exchanger shown in Fig. 14 or Fig. 15, in other words, may perform essentially the same function as three different exchangers, while being constructionally simpler and less costly than three separate exchangers, since it has only one or two tube plates, depending on whether the tubes are U-shaped or straight.

For example, the exchanger shown in Fig. 14 may be inserted in a reactor for ammonia synthesis, and the three passages on the shell side perform intermediate cooling between catalytic beds.

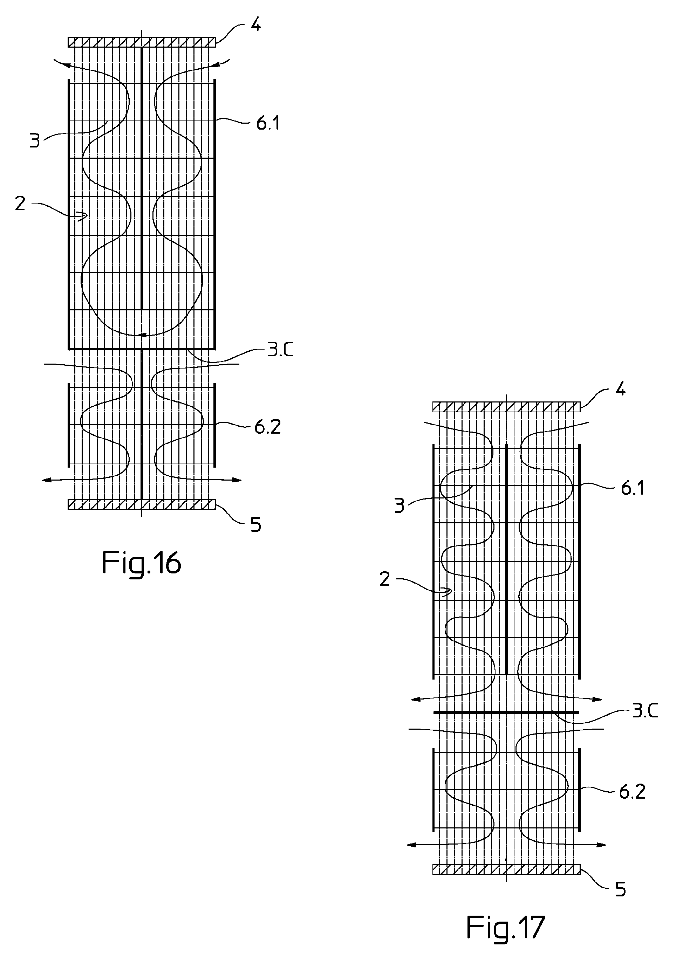

Figs. 16 and 17 show two configurations in which the shell side is divided into two passages. In Fig. 16 there is a seal between the blind baffle 3.c and the shell section 6.1, with the first passage outlet alongside the inlet. Said configuration is advantageous in certain applications, for example vertical exchangers inside reactors, where it is desirable that both the inlet and outlet of the shell side gas are located at the top.

The invention may be applied to new reactors, in the form of new equipment, or may be used to modernize existing reactors.

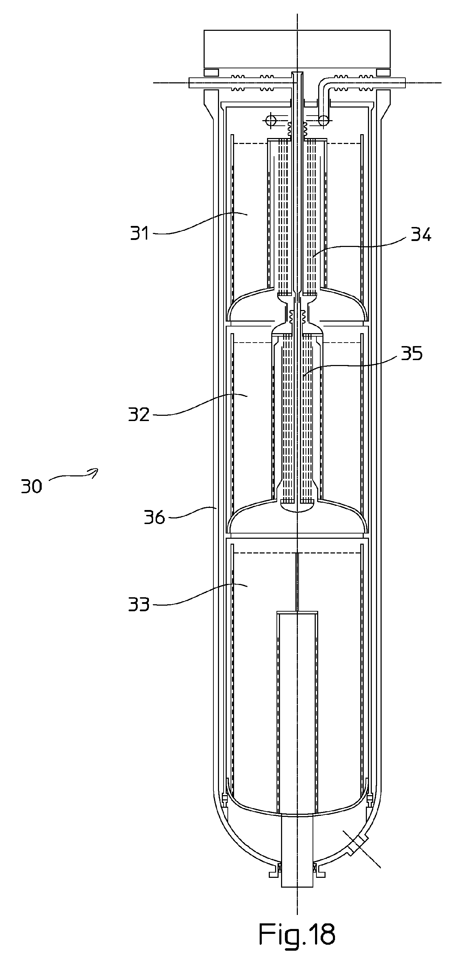

One of the applications of the invention relates to modernization of the reactors of the type shown in Fig. 18. By replacing one or more pre-existing tube exchangers with tube exchangers according to the invention, advantages may be obtained, including: greater efficiency, recovery of useful volume for the catalyst, possibility of reducing the internal piping.

Said Fig. 18 shows schematically a multi-bed reactor 30 for the high-pressure synthesis of ammonia or methanol, comprising catalytic beds 31, 32, 33 and two intermediate cooling exchangers 34, 35. The reactor 30 is equipped with an outer shell 36 able to withstand the operating pressure. The operating principle of the reactor 30 is known from the art and does not require a detailed description. A flow of reagent gases passes radially through the first bed 31, increasing in temperature owing to the exothermic reaction; the hot flow leaving the bed 31 is cooled when passing through the shell side of the exchanger 34 and passes into the bed 32 for an ensuing reaction stage; upon leaving the bed 32, the gas cools when passing into the shell side of the exchanger 32 and enters into the bed 33 for the final conversion stage.

Fig, 19 shows the modified reactor, indicated by the reference number 30'. The heat exchange between the catalytic beds is performed by a unit 1 according to the invention with segmental shell formed by two sections 6.1 and 6.2 which replaces the two exchangers 34, 35. The path of the shell side gas is regulated by means of suitable seals 37.

One of the advantages of the invention consists in the fact that, owing to the segmented structure of the shell, a single tube bundle is sufficient and therefore only two tube plates are needed. The conventional structure according to Fig. 18 instead requires two tube bundles, each having two respective plates.

It should be noted that the elevated reaction pressure can be withstood by the shell 36. The shell 6.1, 6.2 of the internal unit 1 is subject to a pressure difference substantially due to pressure losses and therefore limited to a few bars.

## Claims

1. Tube-bundle heat exchange unit (1) for internals of heat exchangers or reactors, comprising:
- at least one tube bundle (2);
- a plurality of baffles (3) associated with said tube bundle, which define through-openings (12) according to a predefined pattern, each opening being traversed by one or more tubes of the tube bundle, and
- a shell (6) which surrounds said tube bundle and said baffles,
**characterized in that**:
- said shell (6) is structurally integral with said baffles (3) of the tube bundle.

2. Unit according to claim 1, **characterized in that** said shell has a non-circular cross-section.

3. Unit according to claim 2, said shell having a cross-section chosen from among: a cross-section with a regular or irregular polygonal form; a stepped cross-section; a cross-section including at least one straight side and at least one curvilinear side, preferably in the form of a circle arc.

4. Unit according to any one of the preceding claims, **characterized in that** said shell comprises at least one longitudinal joint (17).

5. Unit according to claim 4, **characterized in that** said at least one longitudinal joint is releasable.

6. Unit according to claim 4 or 5, **characterized in that** said shell (6) comprises a plurality of circumferential portions, each of said portions surrounding said tube bundle around a given angle having a vertex on a longitudinal axis of the bundle.

7. Unit according to any one of the preceding claims, **characterized in that** said shell (6) comprises a plurality of longitudinal sections (6.1 - 6.3; 16.1, 16.2).

8. Unit according to any one of the preceding claims, **characterized in that** said longitudinal sections have a length, in the longitudinal direction, substantially equivalent to the mutual distance (p) between said baffles (3) of the tube bundle.

9. Unit according to any one of the preceding claims, wherein each of said baffles (3) comprises a peripheral frame (10) and said shell (6) is fixed directly to said frame (10).

10. Unit according to any one of claims 1 to 8, wherein each of said baffles (3) consists of elements (11) which define said openings (12) for the tubes, and said elements (11) are fastened directly to the shell (6), the baffles having no peripheral frame.

11. Unit according to any one of the preceding claims, **characterized in that** said shell (6) comprises means (22) for constraining the baffles (3), acting at least in an axial direction parallel to said tube bundle, said baffles being therefore axially locked in a predefined position by said shell.

12. Unit according to any one of the preceding claims, **characterized by** a substantially fluid-tight joint between said baffles and said shell.

13. Unit according to any one of the preceding claims comprising:
- a shell comprising at least two longitudinal sections, and
- at least one blind baffle (3.c) between two consecutive sections of said shell,
- said blind baffle forming a gas-tight barrier in the shell side of said apparatus, the shell side of the apparatus thus being divided into at least two separate gas passages.

14. Unit according to any one of the preceding claims, further comprising at least one impermeable sealed partition (27) which is longitudinal and parallel with respect to the tube bundle.

15. A pressurized apparatus (30') comprising:
- an outer shell (36) resistant to a predefined operating pressure, and
- at least one internal tube heat exchange unit (1), according to any one of the preceding claims.

16. An apparatus according to claim 15, said apparatus being a chemical reactor.

17. A reactor apparatus according to claim 16, wherein:
- the reactor is a multi-bed reactor comprising a plurality of adiabatic catalytic beds, and
- the at least one tubular heat exchange unit inside the reactor is a heat exchanger for intercooling between two catalytic beds.

18. A reactor apparatus according to claim 16 or 17, said reactor being for ammonia synthesis or methanol synthesis.

19. Method for assembling a tube heat exchange unit for internals of heats exchangers or reactors according to any one of claims 1 to 14, the method comprising at least the following steps:
a) providing a tube bundle (2) having a plurality of baffles (3), the baffles being freely movable at least in the axial direction with respect to said tube bundle,
b) structurally fixing a shell (6) to said baffles (3), said shell axially constraining the baffles with respect to the tube bundle in respective operating positions.

20. Method for modernizing a multi-bed catalytic reactor (30), in particular for ammonia synthesis or methanol synthesis, wherein:
- said reactor comprises a plurality of adiabatic catalytic beds (31, 32, 33) and at least one tubular heat exchanger (34) for intermediate cooling of gas between two of said catalytic beds,
- the method comprises the replacement of at least one intermediate cooling heat exchanger with a new heat exchanger comprising a heat exchange unit (1) according to any one of claims 1 to 14.
